# EUROPEAN PATENT SPECIFICATION

(11) **EP 2 558 257 B1**
(45) Date of publication and mention of the grant of the patent: **31.12.2014**
(21) Application number: 11768512.3
(22) Date of filing: 13.04.2011
(51) Int. Cl.: B28B 3/22

(54) **METHOD AND APPARATUS FOR FEEDING AND COMPACTING CONCRETE AND A FEEDING SCREW**
VERFAHREN UND VORRICHTUNG ZUR FÖRDERUNG UND PRESSUNG VON BETON SOWIE FÖRDERSCHRAUBE DAFÜR
PROCÉDÉ ET APPAREIL POUR ACHEMINER ET COMPACTER DU BÉTON, ET VIS D'ALIMENTATION

(30) Priority: 16.04.2010 FI 20105400
(43) Date of publication of application: 20.02.2013
(73) Proprietor: Ahonen, Jouni, 37830 Viiala (FI)
(72) Inventor: Ahonen, Jouni, 37830 Viiala (FI)
(74) Representative: Seppo Laine Oy
(86) International application number: PCT/FI2011/050323
(87) International publication number: WO 2011/128509

(56) References cited:
- WO-A1-01/24996
- GB-A- 472 254
- GB-A- 2 184 976
- US-A- 4 046 848
- US-A- 5 458 475
- US-A1- 2003 137 894
- US-A1- 2005 249 030

## Description

The present invention relates to a method and arrangement for feeding and compacting concrete in a shear-compaction extruder, as well as a feed screw.

In the building industry, large numbers of various concrete products, which are prefabricated in factories, are used. Examples of such products are slabs, columns, and prefabricated units. Known methods for casting elongated concrete products are the extrusion technique and the slipformer technique. These methods have been in general use since about the end of the 1960s. They are typically used to manufacture floor units and simple beam profiles.

In the extrusion technique, concrete is fed to an elongated form base with the aid of screws through nozzles and forming elements. The axes of the screws are parallel to the casting base and thus also to the cast with the shaping elements, with the aid of which cavities, for example, can be formed in the unit, being extensions of the screws. Most typically, the products are hollow-core slabs, which in practice have become standardized as 1200-mm wide and 150-mm - 400-mm thick. The compaction of the concrete takes place mainly with the aid of the feed pressure of the screws and vibration, or the feed pressure of the screws and mechanical compaction movements i.e. shear compaction. In the method, it is typically possible to use stiff concrete and in it a good concrete compaction and strength are generally achieved. Thanks to the stiff mass, the cast product remains highly cohesive immediately after casting, which is a precondition for the manufacture of hollow-core products. One problem with extruder casting machines is the high degree of wear of the screws and other components, which is due to the high feed pressure and the force arising from the feeding of the stiff mass. The batching of the concrete and the other casting properties must also be precisely controlled.

Apparatus for feeding and compacting concrete or clay by means of screws is known from the documents GB 2184976 A, GB472254 A and US4046848 A.

Extruders are divided, according to the manner of compaction described above, into vibrator machines and beam-vibrator (shear-compaction) machines. In both, the feed screws are the same in principle. The essential difference between the methods is that in the vibration method the pressure waves move in all directions while in the shear-compaction method the work movements are in an appropriate direction. In the case of a dry, zero-slump mass, the pressure waves are rapidly suppressed and therefore a greater deal of vibration power is required in order to create the desired compaction result. The great and often high-frequency vibration leads to wear, excessive noise and other detriments. For this reason, the most highly-developed extruders are nowadays based on the shear-compaction method.

The screw's function in the extruder is to transport the concrete mass into the space delimited by the shaping elements and at the same time to create a pressure, which will be a central factor in promoting and controlling the compaction gradient. The screw also participates in compaction in connection with shear compaction. As the screw moves typically backwards and forwards along with the core, its shape creates an oriented compaction in the space between two screws and between the screw and the other delimiting nozzle components. For reasons of balance, the adjacent screws move in opposite directions and a float is created, in which the mass under increasing pressure is floated and consolidates due to the compaction movement. The elementary units of the mass seek an increasingly compact space.

In the design of the screws, no attention has been paid to the effect of this oriented compaction movement; instead, essentially the same screws are applied to shearprinciple and vibration machines. The blade of the screw forming the helix of the screw protrudes from the casing of the body part in the centre of the screw transversely at right angles to the surface of the casing, so that the side of the blade of both helixes forms a flat surface at right angles to the longitudinal movement of the screw. This flat surface is only at an angle to the extent of the rise of the helix relative to the direction of movement, so that when the screw feeds forwards, it pushes the concrete towards the nozzle component compacting it, but, in the return direction, pulls the concrete mass in the same way backwards, when the compaction effect created by the screw blade opposes the movement of the screw. At the same time, an area that is empty of concrete, or at least has a low pressure, arises in front of the screw on the feed-direction side, which weakens the compaction effect and may leave air in the concrete mass, thus weakening the product's strength and quality.

The existing feed screws of extruders have thus a functional deficiency, which problem the present invention seeks to solve.

The present invention is intended to create a method, arrangement, and feed screw, with the aid of which the feeding and compaction of concrete in an extruder casting machine can be improved.

The invention is further intended to create a feed screw, which is more resistant to wear than previously.

One embodiment of the invention is intended to create a solution, with the aid of which the pressure in the area of the nozzle components can be reduced.

The invention is based on the fact that the surface of the side of the screw blade of the feed screw, which is on the trailing side of the helix, is, for at least part of the height of the helix, tilted in the direction of the trailing side, in such a way that a straight line drawn, in the same cross-section as the point of the screw blade, from the intersection of the screw blade on the trailing side of the screw blade and the screw casing, will form, over at least part of the length of the helix, an acute angle with the central axis of the screw in this cross-section.

According to one embodiment of the invention, the surface of the side of the screw blade of the feed screw, which is on the trailing side of the helix, is, for at least part of the height of the helix, tilted in the direction of the trailing side, in such a way that the surface of the screw blade from the intersection of the screw blade on the trailing side of the screw blade and the casing of the screw is concave, in the same cross-section.

According to one embodiment of the invention, a straight line drawn, from the intersection of the screw blade on the leading edge of the screw blade and the casing of the screw to the point of the screw blade, forms, over at least part of the length of the helix, an acute angle with the central axis of the screw, in this cross-section.

According to one embodiment of the invention, the envelope of the surface of the screw blade on the leading side of the screw blade, from the intersection of the screw blade and the casing of the screw to the point of the screw blade, in the same cross-section, is not straight for at least part of the length of the helix.

According to one embodiment of the invention, the envelope of the screw blade on the leading side of the screw blade, from the intersection of the screw blade and the casing of the screw to the point of the screw blade, in the same cross-section, is a sine curve for at least part of the length of the helix.

According to one embodiment of the invention, the envelope of the surface of the screw blade on the leading side of the screw blade, from the intersection of the screw blade and the casing of the screw blade to the point of the screw blade, in the same cross-section, is concave for at least part of the length of the helix.

According to one embodiment of the invention, the envelope of the surface of the screw blade on the leading side of the screw blade, from the intersection of the screw blade and the casing of the screw blade to the point of the screw blade, in the same cross-section, is convex for at least part of the length of the helix.

According to one embodiment of the invention, the trailing side of the screw blade is coated.

According to one embodiment of the invention, the shape of the leading side of the screw blade is made of a filling material, which is more resistant to wear than the material of the body of the screw.

More specifically, the method, arrangement, and feed screw, according to the invention, for feeding concrete in an extruder casting machine, are characterized by what is stated in the characterizing portion of Claim 1.

Considerable advantages are gained with the aid of the embodiment of the invention.

The present invention applies particularly to all shear-compaction extruders. The feed screw in them has remained the same from the time that a transfer was made to these manufacturing methods. However, the screw implements several new functionalities in float compaction. In addition to the screw transporting and feeding concrete around the forming mandrel, i.e. through the extrusion nozzle with the aid of the pressure it creates, it also compacts the concrete. This compaction takes place as a backwards and forwards movement of the adjacent screws in compaction chambers. The shape of the screws presently in use was not designed to correspond to this new movement. In the screw according to the invention, the intention has been to exploit and boost the compacting effect of the backwards and forwards movement of the feed screw. The essential factor is the shape of the blade of the helix and the helical ridge of the screw: it is tilted in the direction of the active work movement. This implements an active work movement, boosted by a pocket-like thrust face. Backwards, i.e. in the direction of the incoming concrete, the shape is conical, or otherwise slightly tilted, so that the mass particles move aside outwards and do not in the same way move detrimentally in the direction of the movement. The effect of shear compaction can be boosted by adjusting the speed of the movement and, if necessary, by additional vibration.

With the aid of the invention, the feed screw and casting machine can be made shorter and, thanks to the improved compaction, the core-forming sleeve can be shortened. One central advantage is increased compaction. The theory described above has been tested in practical trials and these have shown compaction to be increased by about 10...25 %. A second advantage is that the screw, and also the forming sleeve, can be shortened. The best length for the screw is the effective compaction area created by the counterforce to the feed of the concrete mass. After the level of that counterforce, once the thrust force of the extruder has been created, it is unnecessary, and indeed detrimental, to extend the length of the screw. The improvement in the wear-resistance of the screw is also important; the screw wears rapidly due to the pressure of the concrete and the movement taking place along the surface of the hard particles, so that it must be replaced at regular intervals. Because the screw is an expensive component, the replacement of the feed screws increases manufacturing costs and a considerable advantage will be gained by using a more wear-resistant screw. Because the pressure in the forming face/nozzle diminishes, the need for water in the mass is reduced, so that the need for cement is also reduced and manufacturing costs are reduced for this reason too. For these reasons, the cast product highly cohesive immediately after casting and the curing time is short.

In the following, the invention is examined with the aid of example and with reference to the accompanying drawings.
Figure 1 presents a shear-compaction extruder.
Figure 2 presents one embodiment of the feed screw according to the invention.
Figure 3 presents a three-screw arrangement consisting of screws according to the invention.

That side of the helix, which travels in front in the direction of rotation of the screw, in other words, that side, which, when the screw rotates, presses the concrete in front of it in the direction opposite to the direction of movement of the casting machine, is referred to as the trailing side of the feed screw and the helical blade.

The leading side is the forward side relative to the direction of movement of the concrete, i.e. the opposite side of the helix relative to the trailing side.

The direction of movement of the casting machine is away from the cast in the direction of the longitudinal axis of the cast product.

The central axis of the feed screw is its axis of symmetry.

The term cross-section of the feed screw refers to a cross-section cut by some plane running through its central axis.

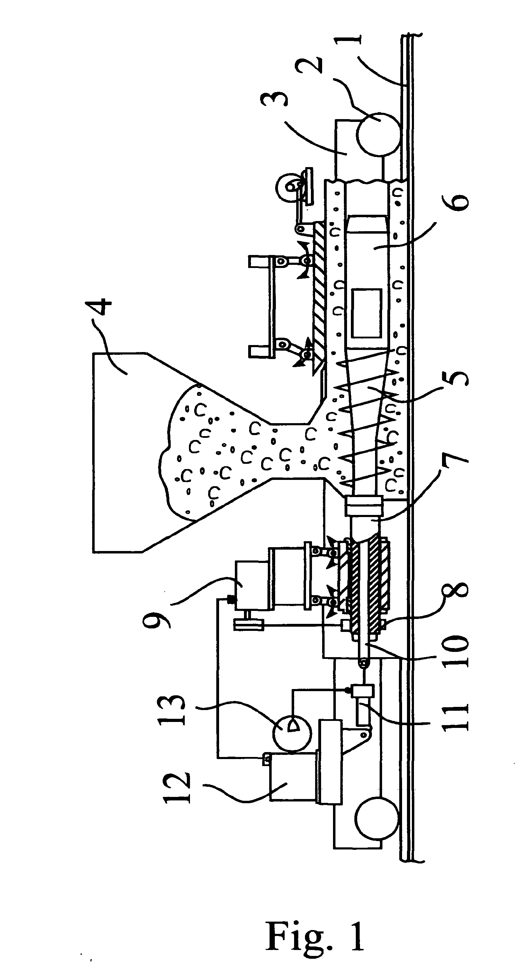

Figure 1 shows an extruder-type casting machine, which is arranged to travel on carrier wheels 2 running on the edges of the casting form 1. The machine is assembled in a frame 3. In this machine, there are three conical feed screws 5. The feed screws 5 are installed in the frame 3 by means of the drive shafts 7 rotating the screws. The sleeves 6 forming the cores of a hollow-core slab are arranged at the output end of the feed screws, in the casting direction. A drawbar 10 is fitted through the centre shaft of each feed screw 5, and each drive shaft is moved by a hydraulic cylinder 11 driven by a hydraulic power unit 12 and a pressure manifold 13. At the end of the drive shaft is an adjustable-speed reduction gear 8, through which the drive motors 9 of the feed screws 5 are connected to the drive shafts 7. At the front end of the feed screws is a conical hopper 4, the emptying opening of which is arranged at the start of the feed screws 5.

The machine of Figure 1 operates in such a way that, when the feed screws 7 are rotated, the mass coming from the hopper 4 falls onto the start of the screws 5 and begins to move, propelled by their rotatory movement, towards the nozzle area, where the forming sleeves 6 are located. The thrust created by the screws 5 compresses the concrete into the nozzle area, when its pressure rises, the concrete is compacted and a reaction force arises, which pushes the machine away from the cast forming in the nozzle area. The compaction effect is increased by the backwards and forwards movement of the feed screws 5 and sleeves 6. In addition to their compaction movements, other forms of compaction too are used in the example machine, but these do not relate to our invention, and are therefore not described here in greater detail.

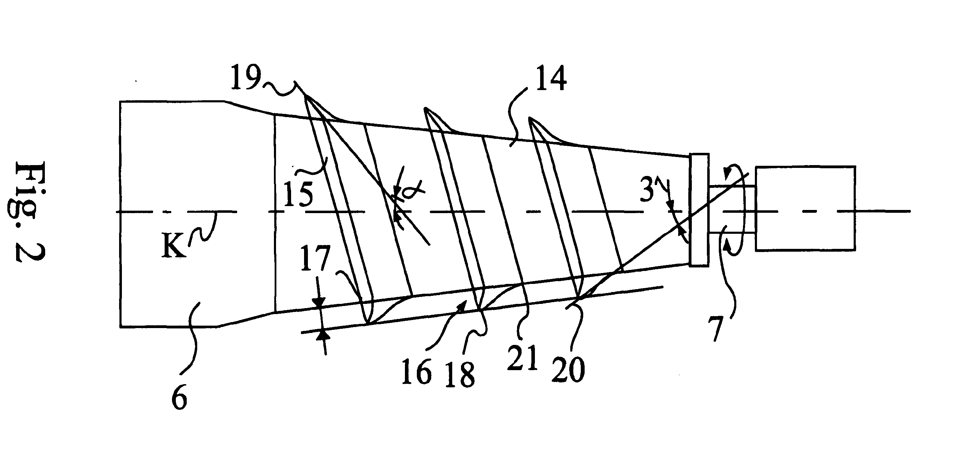

The construction of the feed screw according to the invention can be seen in Figure 2. Here, a drive shaft 7 according to Figure 1 is attached to the feed screw and there is a core-forming sleeve on the trailing side of the screw. The body of the feed screw forms a conical casing 14, on the outer surface of which a helix is formed from a helical blade 15. The casing and the helical blade can be made as a single casting, the helical blade can be welded to the casing, or the helical blade and the casing can be a unified cast blank, to which the helix according to the invention is formed by adding material. Thus, the casing and the helical blank can be of a more economical material or one that is more suitable as a body structure while the parts of the casing and helix exposed to wear are manufacture from materials most suitable to the stresses acting on each area.

The shape of the helical blade must be made such that, in the compression direction, i.e. the concrete input direction, the helix bites into the concrete mass as well as possible when the screw is pushed forwards. Correspondingly, in the return movement, the concrete should be allowed to flow as freely as possible over the helical blade and its point. This is achieved in such a way that the trailing side of the helical blade is formed to be slanting or concave and the leading side as smoothly as possible slanting or convex. More specifically, the surface 16 of the side of the helical blade 15 of the feed screw 6, which is on the trailing side of the helix, is, at least for part of the height h of the helix, tilted in the direction of the trailing side, in such a way that a straight line 19 drawn from the intersection 17 of the helical blade 15 on the trailing side of the helical blade to the point 18 of the helical blade, in the same cross-section, forms, over at least part of the length of the helix an acute angle α with the central axis K of the screw in this cross-section.

The surface of the side of the helical blade 15 of the feed screw 5, which is on the trailing side of the helix, can be, at least for part of the height of the helix, tilted in the direction of the trailing side, in such a way that from the intersection of the helical blade on the trailing side of the helical blade 15 and the casing 14 of the screw to the point 18 of the helical blade is concave in the same cross-section.

A straight line 20, drawn, from the intersection 21 of the helical blade 15 on the leading side of the helical blade 15 and the casing 14 of the screw, to the point 18 of the helical blade, forms, over at least part of the length of the helix, an acute angle β with the central axis K of the screw in this cross-section.

The envelope of the surface of the helical blade on the leading side of the helical blade, from the intersection of the helical blade and the casing of the screw, in the same cross-section, can be curved over at least part of the length of the helix.

The envelope of the surface of the helical blade on the leading side of the helical blade, from the intersection of the helical blade and the casing of the screw, in the same cross-section, is preferably a sine curve over at least part of the length of the helix.

The envelope of the surface of the helical blade on the leading side of the helical blade, from the intersection of the helical blade to the point of the helical blade, in the same cross-section, is convex or concave over at least part of the length of the helix.

Because pressure caused by the rotary feed movement of the screw and the thrust movement of the screw acts on the trailing side of the helical blade, it is preferable to surface the trailing side of the helical blade with a durable, wear-resistant coating. The leading side of the helical blade is preferably surfaced with or manufactured from a material, the coefficient of friction of which with concrete is small and, of course, the wear resistance of which is good. One way to implement this is to make the shape of the leading side of the helical blade from a filler material, which has a higher wear resistance than the material of the body of the screw. In this way, the materials of the different parts of the screw can be optimized according to the stresses acting on them.

With the aid of the screw described above, the breaking of compaction, caused by the return movement is reduced and the mass is compacted already in the initial part of the screw. Thus, the screw can be shortened. The amount of the bite of the actual compaction determines the surface angle of the trailing side. It is most advantageous, if the screw is even on the leading side and the angle of the trailing side is as gentle as possible, but nevertheless protrudes sufficiently from the casing of the screw. For practical reasons, such a geometry is not, of course, possible, the shaping being limited by, among other factors, the manufacturing technique. One advantageous shape of the leading side would be a sine curve. If the rise of the helix is made changeable, a greater rise will increase the feed resistance and pressure and the casting speed will drop. It should be noted that possible places of discontinuity should be minimized to achieve an optimum result, but that an advantageous result can be achieved, even though all the features of the invention are not implemented in the same embodiment.

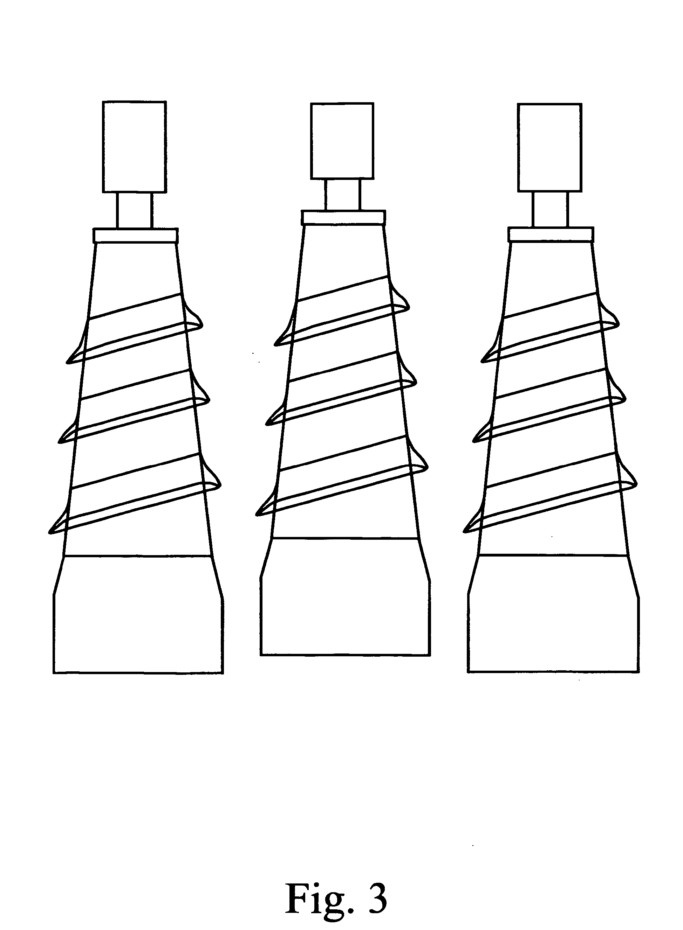

Many alternatives can be implemented when arranging the rhythm of the feed movement of the screws. The screws can move at different rates, the feed movement can be fast and the return movement slow, while at the same time the stroke, the movement frequency, and the rotation speed can be adjusted. In all of this, the balancing of the machine must be taken into account. Figure 3 shows three feed screws in different stages of movement.

According to the invention, the screw is shaped in such a way that its shape is developed to produce the best possible compaction as a component of the shear-compaction method. The work movement of the screw is backwards and forwards and it is possible to see in it an active forwards-directed movement component and a backwards withdrawing component. The former should 'bite' as fully as possible the portion of mass in its area of influence and push it forward towards the space being compacted and finally the surface, in which the compacted mass forms a counterforce, which move the machine in the opposite direction, the direction of travel of the machine. This is the principle of extrusion. On the other hand, the screw should be shaped in such a way that, when withdrawing, it does not pull the concrete mass unnecessarily backwards.

This operation is implemented by shaping the compression side of the screw to be suitably concave, so that the cup or concave shape opens in the direction of the work movement, and correspondingly a convex counter-surface in the direction of the movement withdrawing backwards. The boosting of the compaction can be further illustrated in such a way that the question is of 'launching the mass' towards a more compact state. The screw transports the mass, but the effect can be boosted by orienting the compacting work movement of the blades of the screw to the great extent possible in the direction of the compaction gradient. The solution is implemented by boosting the forwards directed compacting component and reducing the opposite, backwards (= in the direction of travel of the machine) directed component. The blades of the screw are tilted in the direction of the more active part of the screw's work movement (the direction that is opposite to the direction of travel of the machine). The magnitude of the tilt is most suitable 2...20 degrees, depending of the shaping of the screw.

## Claims

1. Method for feeding and compacting a concrete mass in an extrusion casting machine, in which method:
- a concrete mass is fed to at least one feed screw (5),
- the concrete mass is fed parallel to the central axis of the screw (5) by rotating the screw (5) in such a way that the helix (15) thrusts the mass parallel to the central axis of the screw, and
- the mass is compacted by moving the feed screw (5) forwards and backwards inside the mass,
**characterized in that** the concrete mass is fed parallel to the feed screw (5) and the mass is compacted by being pressed on the surface of the trailing side of the helical blade (15) of the feed screw, which is shaped in such a way that, at least part of the height (*h*) of the surface (16) of the side of the helical blade (15) of the feed screw (6), which is on the trailing side of the helix, is tilted in the direction of the trailing side, in such a way that a straight line (19) drawn from the intersection of the helical blade (15) of the trailing side of the helical blade and the point (18) of the helical blade, in the same cross-section, forms an acute angle (α) over at least part of the length of the helix with the central axis (*K*) in this cross-section.

2. Arrangement for feeding and compacting a concrete mass in an extrusion casting machine, which arrangement comprises:
- at least one feed screw (5) for feeding the concrete mass,
- elements (8, 9) for rotating the screw (5) in such a way that its helix (15) pushes the mass parallel to the central axis of the screw, and
- elements (11, 12, 13) for moving the feed screw (5) forwards and backwards inside the mass,
**characterized in that** the feed screw (5) is shaped in such a way that the surface (16) of that side of the helical blade (15) of the feed screw (6), which in on the trailing side of the helix, is, for at least part of the height (h) of the helix, tilted in the direction of the trailing side, in such a way that a straight line (19) drawn from the intersection (17) of the helical blade (15) of the trailing side of the helical blade and the casing (14) of the screw to the point (18) of the helical blade, in the same cross-section, forms an acute angle (α) over at least part of the length of the blade with the central axis (K) of the screw in this cross-section.

3. Arrangement according to Claim 2, **characterized in that** the surface of the side of the helical blade (15) of the feed screw (5), which is on the trailing side of the helix, can be, at least for part of the height (h) of the helix, tilted in the direction of the trailing side, in such a way that the surface (16) of the helical blade from the intersection of the helical blade on the trailing side of the helical blade (15) and the casing (14) of the screw to the point (18) of the helical blade is concave in the same cross-section.

4. Arrangement according to Claim 2 or 3, **characterized in that** straight line (20), drawn, from the intersection (21) of the helical blade (15) on the leading side of the helical blade (15) and the casing (14) of the screw, to the point (18) of the helical blade, forms in the same cross-section, over at least part of the length of the helix, an acute angle (β) with the central axis (K) of the screw in this cross-section.

5. Arrangement according to any of the above Claims 2 - 4, **characterized in that** the envelope of the surface of the helical blade (15) on the leading side of the helical blade (15), from the intersection (21) of the helical blade and the casing (14) of the screw to the point (18) of the helical blade, in the same cross-section, is curved over at least part of the length of the helix.

6. Arrangement according to any of Claims 2 - 5, **characterized in that** the envelope of the surface of the helical blade on the leading side of the helical blade (15), from the intersection (21) of the helical blade to the point (18) of the helical blade, in the same cross-section, is a sine curve over at least part of the length of the helix.

7. Arrangement according to any of Claims 2 - 6, **characterized in that** the envelope of the surface of the helical blade on the leading side of the helical blade (15), from the intersection (21) of the helical blade and the casing of the screw to the point (18) of the helical blade, in the same cross-section, is convex or concave over at least part of the length of the helix.

8. Feed screw (5), which comprises a casing (14) and a helical screw (15) fitted to the surface of the casing, for a concrete extrusion casting machine, **characterized in that** the feed screw (5) is shaped in such a way that the surface (16) of that side of the helical blade (15) of the feed screw (6), which in on the trailing side of the helix, is, for at least part of the height (h) of the helix, tilted in the direction of the trailing side, in such a way that a straight line (19) drawn from the intersection (17) of the helical blade (15) of the trailing side of the helical blade and the casing (14) of the screw to the point (18) of the helical blade, in the same cross-section, forms an acute angle (α) over at least part of the length of the blade with the central axis (*K*) of the screw in this cross-section.

9. Feed screw (5) according to Claim 8, **characterized in that** the surface of the side of the helical blade (15) of the feed screw (5), which is on the trailing side of the helix, can be, at least for part of the height (*h*) of the helix, tilted in the direction of the trailing side, in such a way that the surface (16) of the helical blade from the intersection of the helical blade on the trailing side of the helical blade (15) and the casing (14) of the screw to the point (18) of the helical blade is concave in the same cross-section.

10. Feed screw (5) according to Claim 8 or 9, **characterized in that** straight line (20), drawn, from the intersection (21) of the helical blade (15) on the leading side of the helical blade (15) and the casing (14) of the screw, to the point (18) of the helical blade, forms in the same cross-section, over at least part of the length of the helix, an acute angle (β) with the central axis (*K*) of the screw in this cross-section.

11. Feed screw (5) according to any of the above Claims 8 - 10, **characterized in that** the envelope of the surface of the helical blade (15) on the leading side of the helical blade (15), from the intersection (21) of the helical blade and the casing (14) of the screw to the point (18) of the helical blade, in the same cross-section, is curved over at least part of the length of the helix.

12. Feed screw (5) according to any of Claims 8 - 11, **characterized in that** the envelope of the surface of the helical blade on the leading side of the helical blade (15), from the intersection (21) of the helical blade to the point (18) of the helical blade, in the same cross-section, is a sine curve over at least part of the length of the helix.

13. Feed screw (5) according to any of Claims 8 - 12, **characterized in that** the envelope of the surface of the helical blade on the leading side of the helical blade (15), from the intersection (21) of the helical blade and the casing of the screw to the point (18) of the helical blade, in the same cross-section, is convex or concave over at least part of the length of the helix.

14. Feed screw (5) according to any of Claims 8 - 13, **characterized in that** the trailing side of the helical blade (5) is surfaced with a wear-resistant coating withstanding the compression pressure.

15. Feed screw (5) according to any of Claims 8 - 14, **characterized in that** the leading side of the helical blade (15) is surfaced with or manufactured from a material, the coefficient of friction of which, relative to the concrete being cast, is low and the wear resistance of which is good.

16. Feed screw (5) according to any of Claims 8 - 15, **characterized in that** the shaping of the leading side of the helical blade (15) is manufactured from a filler material.

## Patentansprüche

1. Verfahren zum Fördern und Kompaktieren einer Betonmasse in einer Extrusionsgussmaschine, bei welchem Verfahren
- eine Betonmasse mindestens einer Förderschnecke (5) zugeführt wird,
- die Betonmasse parallel zu der Mittelachse der Schnecke (5) durch Rotation der Schnecke (5) derart gefördert wird, dass die Wendel (15) die Masse parallel zu der Mittelachse der Schnecke schiebt und
- die Masse kompaktiert wird, indem die Förderschnecke (5) vorwärts und rückwärts innerhalb der Masse bewegt wird,
**dadurch gekennzeichnet, dass** die Betonmasse parallel zu der Förderschnecke (5) gefördert wird und die Masse kompaktiert wird, indem sie gegen die Oberfläche der Rückseite des Schneckenblatts (15) der Förderschnecke gepresst wird, die derart geformt ist, dass zumindest ein Teil der Höhe (h) der Oberfläche (16) derjenigen Seite des Schneckenblatts (15) der Förderschnecke (6), die sich auf der Rückseite der Wendel befindet, in Richtung der Rückseite geneigt ist, derart, dass eine gerade Linie (19), die von dem Schnittpunkt des Schneckenblatts (15) auf der Rückseite des Schneckenblatts und der Außenkante (18) des Schneckenblatts gezogen wird, im gleichen Querschnitt, einen spitzen Winkel (α) entlang mindestens eines Teils der Länge der Wendel mit der Mittelachse (K) an diesem Querschnitt bildet.

2. Anordnung zum Fördern und Kompaktieren einer Betonmasse in einer Extrusionsgussmaschine, welche Anordnung umfasst:
- mindestens eine Förderschnecke (5) zum Fördern der Betonmasse,
- Elemente (8, 9) zum Rotieren der Schnecke (5) derart, dass deren Wendel (15) die Masse parallel zu der Mittelachse der Schnecke fördert, und
- Elemente (11, 12, 13) zum Vorwärts- und Rückwärtsbewegen der Förderschnecke (5) innerhalb der Masse,
**dadurch gekennzeichnet, dass** die Förderschnecke (5) derart geformt ist, dass die Oberfläche (16) derjenigen Seite des Schneckenblatts (15) der Förderschnecke (6), welche sich auf der Rückseite der Wendel befindet, entlang mindestens eines Teils der Höhe (h) der Wendel, in Richtung der Rückseite geneigt ist, derart dass eine gerade Linie (19), die von dem Schnittpunkt (17) des Schneckenblatts (15) auf der rückwärtigen Seite des Schneckenblatts und der Schneckenwelle (14) der Schnecke zu der Außenkante (18) des Schneckenblatts gezogen ist, in dem gleichen Querschnitt, einen spitzen Winkel (α) über zumindest einen Teil der Länge des Blatts mit der Mittelachse (K) der Schnecke an diesem Querschnitt bildet.

3. Anordnung nach Anspruch 2, **dadurch gekennzeichnet, dass** die Oberfläche derjenigen Seite des Schneckenblatts (15) der Förderschnecke (5), die sich auf der rückwärtigen Seite der Wendel befindet, über mindestens einen Teil der Höhe (h) der Wendel in Richtung der rückwärtigen Seite geneigt sein kann, derart, dass die Oberfläche (16) des Schneckenblatts zwischen dem Schnittpunkt des Schneckenblatts auf der rückwärtigen Seite des Schneckenblatts (15) und der Schneckenwelle (14) der Schnecke zu der Außenkante (18) des Schneckenblatts im gleichen Querschnitt konkav ausgebildet ist.

4. Anordnung nach Anspruch 2 oder 3, **dadurch gekennzeichnet, dass** eine gerade Linie (20), zwischen dem Schnittpunkt (21) des Schneckenblatts (15) auf der Vorderseite des Schneckenblatts (15) und der Schneckenwelle (14) der Schnecke zu der Außenkante (18) des Schneckenblatts gezogen, an dem gleichen Querschnitt über mindestens einen Teil der Länge der Schnecke einen spitzen Winkel (β) mit der Mittelachse (K) der Schnecke an diesem Querschnitt bildet.

5. Anordnung nach einem der vorstehenden Ansprüche 2 bis 4, **dadurch gekennzeichnet, dass** die Einhüllende der Oberfläche des Schneckenblatts (15) auf der Vorderseite des Schneckenblatts (15) zwischen dem Schnittpunkt (21) des Schneckenblatts und der Schneckenwelle (14) der Schnecke mit der Außenkante (18) des Schneckenblatts im gleichen Querschnitt über mindestens einen Teil der Länge der Wendel gekrümmt ist.

6. Anordnung nach einem der Ansprüche 2 bis 5, **dadurch gekennzeichnet, dass** die Einhüllende der Oberfläche des Schneckenblatts (15) auf der Vorderseite des Schneckenblatts (15) von dem Schnittpunkt (21) des Schneckenblatts zu der Außenkante (18) des Schneckenblatts an dem gleichen Querschnitt eine Sinuskurve über mindestens einen Teil der Länge der Wendel bildet.

7. Anordnung nach einem der Ansprüche 2 bis 6, **dadurch gekennzeichnet, dass** die Einhüllende der Oberfläche des Schneckenblatts (15) auf der Vorderseite des Schneckenblatts (15) von dem Schnittpunkt (21) des Schneckenblatts und der Schneckenwelle der Schnecke zu der Außenkante (18) des Schneckenblatts an dem gleichen Querschnitt über mindestens einen Teil der Länge der Wendel konvex oder konkav ausgebildet ist.

8. Förderschnecke (5) mit einem Gehäuse (14) und einer schraubenförmigen Schnecke (15) die auf der Oberfläche des Gehäuses angeordnet ist, für eine Betonextrusionsgussmaschine, **dadurch gekennzeichnet, dass** die Förderschnecke (5) derart geformt ist, dass die Oberfläche (16) derjenigen Seite des Schneckenblatts (15) der Förderschnecke (6), welche sich auf der Rückseite der Wendel befindet, entlang mindestens eines Teils der Höhe (h) der Wendel, in Richtung der Rückseite geneigt ist, derart dass eine gerade Linie (19), die von dem Schnittpunkt (17) des Schneckenblatts (15) auf der rückwärtigen Seite des Schneckenblatts und der Schneckenwelle (14) der Schnecke zu der Außenkante (18) des Schneckenblatts gezogen ist, in dem gleichen Querschnitt, einen spitzen Winkel (α) über zumindest einen Teil der Länge des Blatts mit der Mittelachse (K) der Schnecke an diesem Querschnitt bildet.

9. Förderschnecke 5 nach Anspruch 8, **dadurch gekennzeichnet, dass** die Oberfläche derjenigen Seite des Schneckenblatts (15) der Förderschnecke (5), die sich auf der rückwärtigen Seite der Wendel befindet, über mindestens einen Teil der Höhe (h) der Wendel in Richtung der rückwärtigen Seite geneigt sein kann, derart, dass die Oberfläche (16) des Schneckenblatts zwischen dem Schnittpunkt des Schneckenblatts auf der rückwärtigen Seite des Schneckenblatts (15) und der Schneckenwelle (14) der Schnecke zu der Außenkante (18) des Schneckenblatts im gleichen Querschnitt konkav ausgebildet ist.

10. Förderschnecke (5) nach Anspruch 8 oder 9, **dadurch gekennzeichnet, dass** eine gerade Linie (20), zwischen dem Schnittpunkt (21) des Schneckenblatts (15) auf der Vorderseite des Schneckenblatts (15) und der Schneckenwelle (14) der Schnecke zu der Außenkante (18) des Schneckenblatts gezogen, an dem gleichen Querschnitt über mindestens einen Teil der Länge der Schnecke einen spitzen Winkel (β) mit der Mittelachse (K) der Schnecke an diesem Querschnitt bildet.

11. Förderschnecke (5) nach einem der Ansprüche 8 bis 10, **dadurch gekennzeichnet, dass** die Einhüllende der Oberfläche des Schneckenblatts (15) auf der Vorderseite des Schneckenblatts (15) zwischen dem Schnittpunkt (21) des Schneckenblatts und der Schneckenwelle (14) der Schnecke mit der Außenkante (18) des Schneckenblatts im gleichen Querschnitt über mindestens einen Teil der Länge der Wendel gekrümmt ist.

12. Föderschnecke (5) nach einem der Ansprüche 8 bis 11, **dadurch gekennzeichnet, dass** die Einhüllende der Oberfläche des Schneckenblatts (15) auf der Vorderseite des Schneckenblatts (15) von dem Schnittpunkt (21) des Schneckenblatts zu der Außenkante (18) des Schneckenblatts an dem gleichen Querschnitt eine Sinuskurve über mindestens einen Teil der Länge der Wendel bildet.

13. Förderschnecke (5) nach einem der Ansprüche 8 bis **12,dadurch gekennzeichnet, dass** die Einhüllende der Oberfläche des Schneckenblatts (15) auf der Vorderseite des Schneckenblatts (15) von dem Schnittpunkt (21) des Schneckenblatts und der Schneckenwelle der Schnecke zu der Außenkante (18) des Schneckenblatts an dem gleichen Querschnitt über mindestens einen Teil der Länge der Wendel konvex oder konkav ausgebildet ist.

14. Förderschnecke (5) nach einem der Ansprüche 8 bis 13, **dadurch gekennzeichnet, dass** die rückwärtige Seite des Schneckenblatts (5) mit einer gegen Verschleiß widerstandsfähigen Beschichtung versehen ist, die dem Kompressionsdruck widersteht.

15. Förderschnecke (5) nach einem der Ansprüche 8 bis 14, **dadurch gekennzeichnet, dass** die Vorderseite des Schneckenblatts (15) mit einem Material beschichtet oder aus einem Material hergestellt ist, dessen Reibungskoeffizient, im Vergleich zu dem zu gießenden Beton, niedrig ist und dessen Verschleißwiderstand gut ist.

16. Förderschnecke (5) nach einem der Ansprüche 8 bis 15, **dadurch gekennzeichnet, dass** die Formgebung der Vorderseite des Schneckenblatts (15) aus einem Füllmaterial hergestellt ist.

## Revendications

1. Procédé pour fournir et compacter une masse de béton dans une machine de coulée à extrusion, dans lequel procédé :
- une masse de béton est fournie à au moins une vis d'alimentation (5),
- la masse de béton est fournie parallèlement à l'axe central de la vis (5) en faisant tourner la vis (5) de manière telle que l'hélice (15) pousse la masse parallèlement à l'axe central de la vis, et
- la masse est compactée en déplaçant la vis d'alimentation (5) vers l'avant et vers l'arrière à l'intérieur de la masse,
**caractérisé en ce que** la masse de béton est fournie parallèlement à la vis d'alimentation (5) et la masse est compactée en étant pressée sur la surface de la face arrière de la lame hélicoïdale (15) de la vis d'alimentation, qui est formée de manière telle qu'au moins une partie de la hauteur (h) de la surface (16) de la face la lame hélicoïdale (15) de la vis d'alimentation (6), qui est sur la face arrière de l'hélice, soit inclinée dans la direction de la face arrière, de manière telle qu'une ligne droite (19), tirée à partir de l'intersection de la lame hélicoïdale (15) de la face arrière de la lame hélicoïdale et du point (18) de la lame hélicoïdale, dans la même section transversale, forme un angle aigu (α) sur au moins une partie de la longueur de l'hélice avec l'axe central (K) dans cette section transversale.

2. Agencement pour fournir et compacter une masse de béton dans une machine de coulée à extrusion, lequel agencement comprend :
- au moins une vis d'alimentation (5) pour fournir la masse de béton,
- des éléments (8, 9) pour faire tourner la vis (5) de manière telle que son hélice (15) pousse la masse parallèlement à l'axe central de la vis, et
- des éléments (11, 12, 13) pour déplacer la vis d'alimentation (5) vers l'avant et vers l'arrière à l'intérieur de la masse,
**caractérisé en ce que** la vis d'alimentation (5) est formée de manière telle que la surface (16) de cette face de la lame hélicoïdale (15) de la vis d'alimentation (6), qui est sur la face arrière de l'hélice, soit, pour au moins une partie de la hauteur (h) de l'hélice, inclinée dans la direction de la face arrière, de manière telle qu'une ligne droite (19) tirée de l'intersection (17) de la lame hélicoïdale (15) de la face arrière de la lame hélicoïdale et du corps (14) de la vis au point (18) de la lame hélicoïdale, dans la même section transversale, forme un angle aigu (α) sur au moins une partie de la longueur de la lame avec l'axe central (K) de la vis dans cette section transversale.

3. Agencement selon la revendication 2, **caractérisé en ce que** la surface de la face de la lame hélicoïdale (15) de la vis d'alimentation (5), qui est sur la face arrière de l'hélice, peut être, au moins sur une partie de la hauteur (h) de l'hélice, inclinée dans la direction de la face arrière, de manière telle que la surface (16) de la lame hélicoïdale, de l'intersection de la lame hélicoïdale sur la face arrière de la lame hélicoïdale (15) et du corps (14) de la vis au point (18) de la lame hélicoïdale, soit concave dans la même section transversale.

4. Agencement selon la revendication 2 ou 3, **caractérisé en ce qu'**une ligne droite (20), tirée, de l'intersection (21) de la lame hélicoïdale (15) sur la face avant de la lame hélicoïdale (15) et du corps (14) de la vis, au point (18) de la lame hélicoïdale, forme dans la même section transversale, sur au moins une partie de la longueur de l'hélice, un angle aigu (β) avec l'axe central (K) de la vis dans cette section transversale.

5. Agencement selon une quelconque des revendications précédentes 2 à 4, **caractérisé en ce que** l'enveloppe de la surface de la lame hélicoïdale (15) sur la face avant de la lame hélicoïdale (15), de l'intersection (21) de la lame hélicoïdale et du corps (14) de la vis au point (18) de la lame hélicoïdale, dans la même section transversale, est courbée sur au moins une partie de la longueur de l'hélice.

6. Agencement selon une quelconque des revendications 2 à 5, **caractérisé en ce que** l'enveloppe de la surface de la lame hélicoïdale sur la face avant de la lame hélicoïdale (15), de l'intersection (21) de la lame hélicoïdale au point (18) de la lame hélicoïdale, dans la même section transversale, est une courbe sinusoïdale sur au moins une partie de la longueur de l'hélice.

7. Agencement selon une quelconque des revendications 2 à 6, **caractérisée en ce que** l'enveloppe de la surface de la lame hélicoïdale sur la face avant de la lame hélicoïdale (15), à partir de l'intersection (21) de la lame hélicoïdale et du corps de la vis au point (18) de la lame hélicoïdale, dans la même section transversale, est convexe ou concave sur au moins une partie de la longueur de l'hélice.

8. Vis d'alimentation (5), qui comprend un corps (14) et une vis hélicoïdale (15) installée sur la surface du corps, pour une machine de coulée à extrusion pour béton, **caractérisée en ce que** la vis d'alimentation (5) est formée de manière telle que la surface (16) de cette face de la lame hélicoïdale (15) de la vis d'alimentation (6), qui est sur la face arrière de l'hélice, soit, sur au moins une partie de la hauteur (h) de l'hélice, inclinée dans la direction de la face arrière, de manière telle qu'une ligne droite (19) tirée à partir de l'intersection (17) de la lame hélicoïdale (15) de la face arrière de la lame hélicoïdale et du corps (14) de la vis au point (18) de la lame hélicoïdale, dans la même section transversale, forme un angle aigu (α) sur au moins une partie de la longueur de la lame avec l'axe central (K) de la vis dans cette section transversale.

9. Vis d'alimentation (5) selon la revendication 8, **caractérisée en ce que** la surface de la face de la lame hélicoïdale (15) de la vis d'alimentation (5), qui est sur la face arrière de l'hélice, peut être, au moins sur une partie de la hauteur (h) de l'hélice, inclinée dans la direction de la face arrière, de manière telle que la surface (16) de la lame hélicoïdale, de l'intersection de la lame hélicoïdale sur la face arrière de la lame hélicoïdale (15) et du corps (14) de la vis au point (18) de la lame hélicoïdale, soit concave dans la même section transversale.

10. Vis d'alimentation (5) selon la revendication 8 ou 9, **caractérisée en ce qu'**une ligne droite (20), tirée, de l'intersection (21) de la lame hélicoïdale (15) sur la face avant de la lame hélicoïdale (15) et du corps (14) de la vis, au point (18) de la lame hélicoïdale, forme dans la même section transversale, sur au moins une partie de la longueur de l'hélice, un angle aigu (β) avec l'axe central (K) de la vis dans cette section transversale.

11. Vis d'alimentation (5) selon une quelconque des revendications précédentes 8 à 10, **caractérisée en ce que** l'enveloppe de la surface de la lame hélicoïdale (15) sur la face avant de la lame hélicoïdale (15), de l'intersection (21) de la lame hélicoïdale et du corps (14) de la vis au point (18) de la lame hélicoïdale, dans la même section transversale, est courbée sur au moins une partie de la longueur de l'hélice.

12. Vis d'alimentation (5) selon une quelconque des revendications 8 à 11, **caractérisée en ce que** l'enveloppe de la surface de la lame hélicoïdale sur la face avant de la lame hélicoïdale (15), de l'intersection (21) de la lame hélicoïdale au point (18) de la lame hélicoïdale, dans la même section transversale, est une courbe sinusoïdale sur au moins une partie de la longueur de l'hélice.

13. Vis d'alimentation (5) selon une quelconque des revendications 8 à 12, **caractérisée en ce que** l'enveloppe de la surface de la lame hélicoïdale sur la face avant de la lame hélicoïdale (15), de l'intersection (21) de la lame hélicoïdale et du corps de la vis au point (18) de la lame hélicoïdale, dans la même section transversale, est convexe ou concave sur au moins une partie de la longueur de l'hélice.

14. Vis d'alimentation (5) selon une quelconque des revendications 8 à 13, **caractérisée en ce que** la face arrière de la lame hélicoïdale (5) est recouverte avec un revêtement résistant à l'usure résistant à la pression de compression.

15. Vis d'alimentation (5) selon une quelconque des revendications 8 à 14, **caractérisée en ce que** la face avant de la lame hélicoïdale (15) est recouverte avec ou fabriquée à partir d'un matériau, dont le coefficient de frottement, par rapport au béton coulé, est faible et dont la résistance à l'usure est satisfaisante.

16. Vis d'alimentation (5) selon une quelconque des revendications 8 à 15, **caractérisé en ce que** le profilage de la face avant de la lame hélicoïdale (15) est fabriqué à partir d'un matériau de remplissage.
